# EUROPEAN PATENT SPECIFICATION

(11) **EP 2 757 804 B1**
(45) Date of publication and mention of the grant of the patent: **16.09.2015**
(21) Application number: 12854219.8
(22) Date of filing: 24.10.2012
(51) Int. Cl.: G01S 5/00, G01S 19/05, H04L 12/26, H04Q 9/00, H04W 4/00, H04J 3/06

(54) **MANAGING SERVER FOR REMOTE MONITORING SYSTEM**
VERWALTUNGSSERVER FÜR EIN FERNÜBERWACHUNGSSYSTEM
SERVEUR DE GESTION POUR SYSTÈME DE TÉLÉSURVEILLANCE

(30) Priority: 02.12.2011 JP 2011264968
(43) Date of publication of application: 23.07.2014
(73) Proprietor: Yanmar Co., Ltd., Osaka-shi, Osaka 530-8311 (JP)
(72) Inventor: SHINOHARA, Yoshihiko, Osaka-shi Osaka 530-8311 (JP); SAKAMOTO, Hirofumi, Osaka-shi Osaka 530-8311 (JP)
(74) Representative: Hinkelmann, Klaus
(86) International application number: PCT/JP2012/077432
(87) International publication number: WO 2013/080710

(56) References cited:
- JP-A- 2001 309 418
- JP-A- 2003 027 528
- JP-A- 2003 028 946
- JP-A- 2005 512 104
- US-A1- 2005 124 390
- US-A1- 2006 211 431
- US-A1- 2011 028 166

## Description

### Technical Field

The present invention relates to a managing server for a remote monitoring system for communication with a remote monitoring terminal device, especially, with a remote monitoring terminal device mounted to mobile work vehicles (e.g., construction and agricultural machinery) or vessels (e.g., pleasure crafts and fishing boats).

### Background Art

Remote monitoring systems have been known which enable communications between a managing server installed at a remote monitoring center and a remote monitoring terminal device mounted to, for example, a mobile work vehicle for monitoring of the mobile work vehicle.

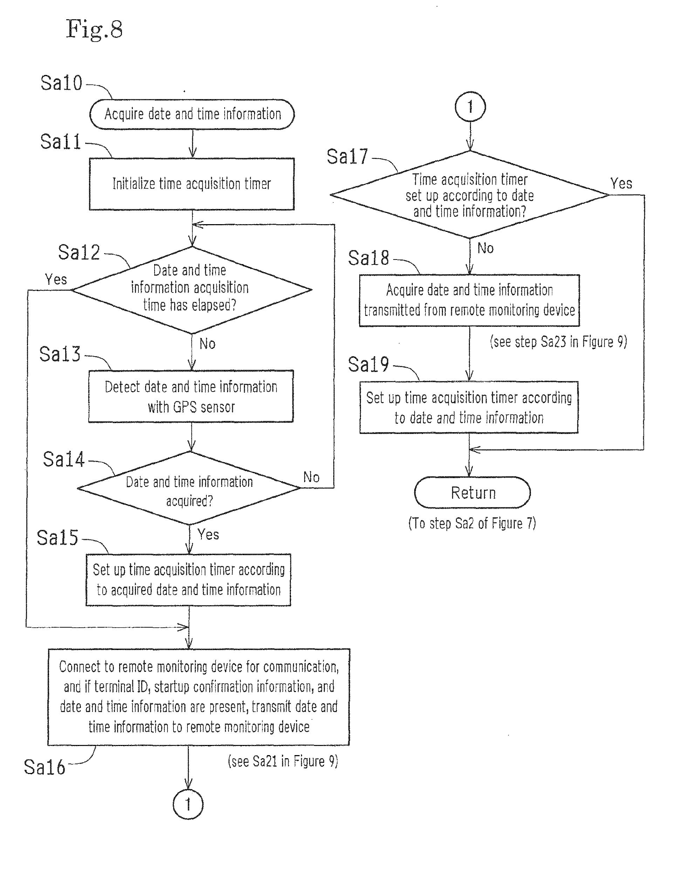

For example, Patent Document 1 discloses an arrangement where a startup date and time is acquired via a GPS satellite system upon a startup of a remote monitoring terminal device (see, for example, Figures 8 and paragraph 0055).

### Citation List

### Patent Literature

Patent Document 1: Japanese Patent Application Publication, Tokukai, No. 2003-027528
Patent Document 2: US 2006/211431 A1
   Document 2 discloses a system and method for determining the location of a base transceiver station (BTS). According to the exemplary method of document 2, a personal BTS attempts to acquire GPS signals using wireless test mobile station, which includes a GPS receiver. If the personal BTS acquires the GPS signals, then the personal BTS estimates its location. If the personal BTS cannot successfully acquire GPS signals, then the personal BTS connects to the BTS application server and receives the current GPS time. BTS-init (a program used for initializing the personal BTS) adjusts the GPS time received from the BTS application server and sets as estimated GPS time of personal BTS. The system determines the location of personal BTS with the estimated GPS time along with other sets of time and location information detected either from neighbouring BTSs or through scanning the list of mobile station uplink channel.
Patent Document 3: US 2005/124390 A1
   Document 3 discloses that the GPS time server 135 accesses GPS reference time at a GPS time source 136 that accurately reflects time associated with the GPS 180, and the GPS time server 135 transmits a single GPS time assistance message to the mobile station 20 including GPS referenced time information, in response to the GPS time assistance request from the mobile station 20. The GPS time information, included in the single message, can allow the GPS location circuit 260, included within the mobile station 20, to more quickly search for and acquire GPS signals from the GPS 180, thereby providing a location for the mobile terminal more quickly.

### Summary of the Invention

### Problems to Be Solved by the Invention

However, Patent Document 1 does not disclose at all a solution to a failure in which the remote monitoring terminal device fails to acquire a startup date and time due to a communication error between the remote monitoring terminal device and the GPS satellites or for a similar reason.

Accordingly, the present invention has an object to provide a managing server for a remote monitoring system for communication with a remote monitoring terminal device which acquires a startup date and time via a GPS satellite system upon a startup, the remote monitoring terminal device being capable of obtaining a startup date and time even if the remote monitoring terminal device has failed to acquire a startup date and time due to a communication error between the remote monitoring terminal device and the GPS satellites or for a similar reason.

### Solution to Problem

The present invention, to address the problems, provides a managing server for a remote monitoring system for communication with a remote monitoring terminal device which includes a GPS sensor and a location detection section acquiring a startup date and time via GPS satellites upon a startup and includes a communications section transmitting not only the startup date and time but also data on the operation state of a mobile work machine or a vessel, wherein said managing server includes a communications section, a control section, a GPS sensor, and a date and time information detection section, said managing server determining whether date and time information is present or absent in information provided by the remote monitoring terminal device upon receiving a communication connection request from the remote monitoring terminal device after a startup thereof, transmitting date and time information acquired by said GPS sensor and said date and time information detection section via GPS satellites to the remote monitoring terminal device upon having determined that the remote monitoring terminal device provides no date and time information, and collecting and storing the data on the operation state of the mobile work machine or the vessel.

According to the present invention, in response to a reception from the remote monitoring terminal device of an indication that the remote monitoring terminal device failed to acquire date and time information via the GPS satellite system upon a startup of the remote monitoring terminal device, the managing server transmits date and time information generated from a date and time of reception of the indication to the remote monitoring terminal device. Therefore, the remote monitoring terminal device is capable of obtaining a startup date and time even if the remote monitoring terminal device has failed to acquire a startup date and time due to a communication error between the remote monitoring terminal device and the GPS satellites or for a similar reason.

### Advantageous Effects of the Invention

As described above, according to the present invention, the remote monitoring terminal device is capable of obtaining a startup date and time even if the remote monitoring terminal device has failed to acquire a startup date and time due to a communication error between the remote monitoring terminal device and the GPS satellites or for a similar reason.

### Brief Description of Drawings

Figure 1 is a schematic illustration of a remote monitoring system for remote monitoring of agricultural machines.
Figure 2 is a schematic block diagram of the arrangement of an agricultural machine with a remote monitoring terminal device.
Figure 3 is a schematic block diagram of the arrangement of a remote monitoring terminal device for an agricultural machine.
Figure 4 is a schematic operation diagram of an operation process for a startup information transmitting function implemented by a startup information transmission control section in a control section.
Figure 5 is a schematic illustration of data structure in a location information storage section employed by a startup information transmission control section.
Figure 6 is a schematic block diagram of the arrangement of a remote monitoring device acting as a managing server for a remote monitoring system.
Figure 7 is a flow chart depicting an exemplary operation of a startup information transmission control section in a remote monitoring terminal device.
Figure 8 is a flow chart depicting a subroutine for a date and time information acquisition process shown in Figure 7.
Figure 9 is a flow chart depicting an exemplary operation of a startup information reception control section in a remote monitoring device.

### Description of Embodiments

The following will describe an embodiment of the present invention in reference to attached drawings by taking a combine harvester, tiller, rice transplanter, or like agricultural machinery as an example of the mobile work vehicle or vessel.

### Overall Arrangement of Remote Monitoring System

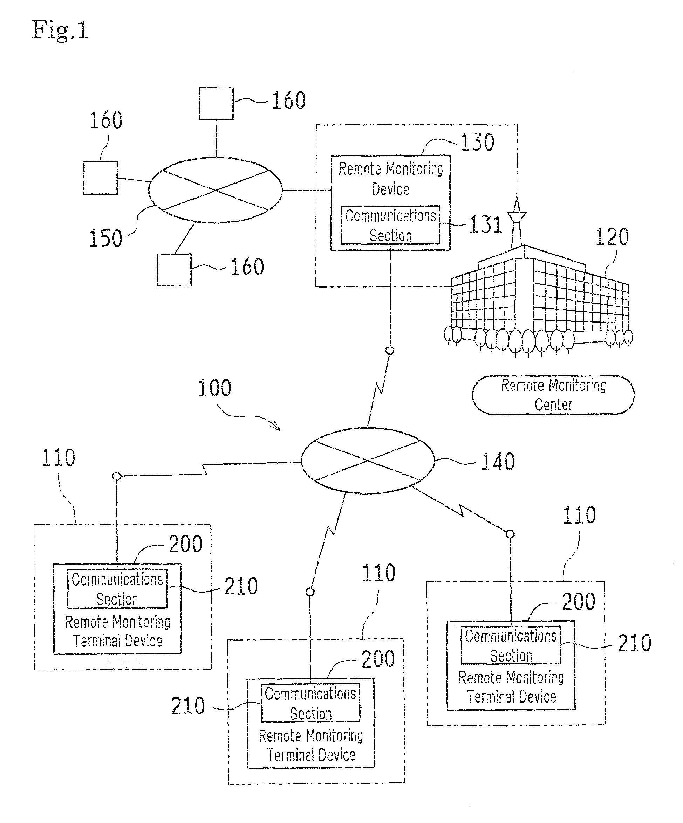

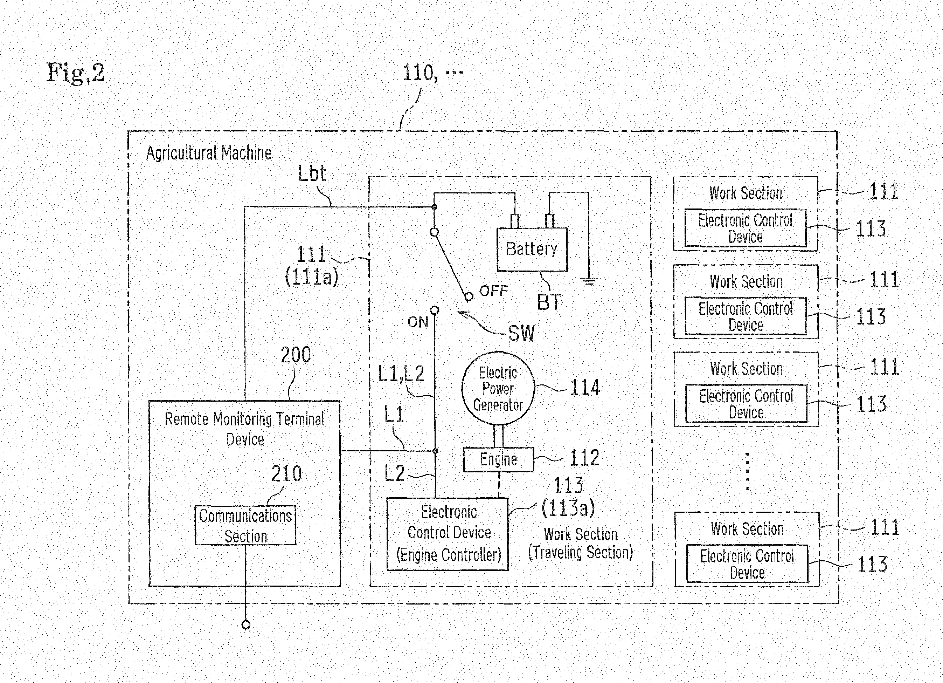

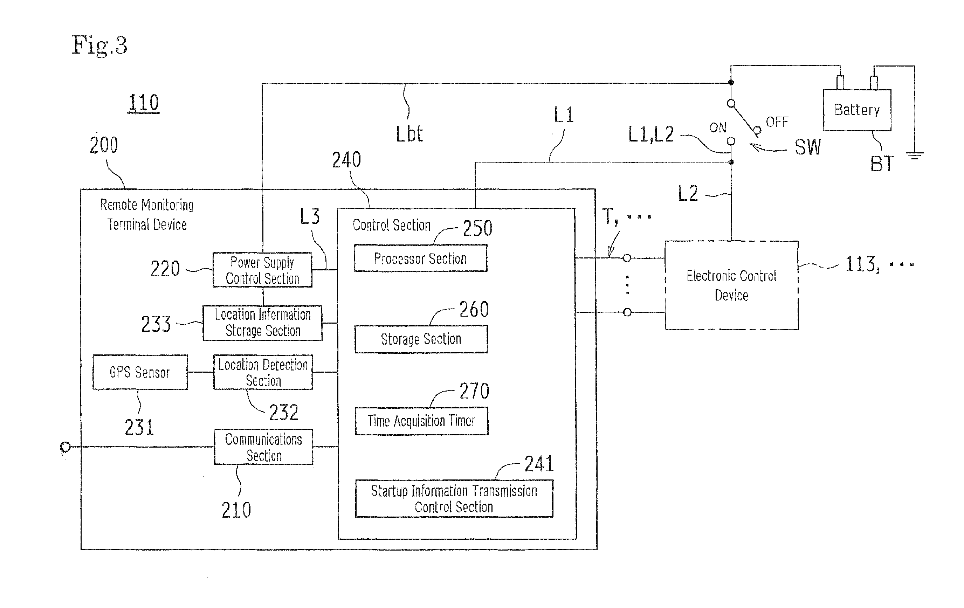

Figure 1 is a schematic illustration of a remote monitoring system 100 for remote monitoring of agricultural machines 110. Figure 2 is a schematic block diagram of the arrangement of an agricultural machine 110 with a remote monitoring terminal device 200. Figure 3 is a schematic block diagram of the arrangement of a remote monitoring terminal device 200 for an agricultural machine 110.

As illustrated in Figure 1, the remote monitoring system 100 includes at least one (in this case, two or more) agricultural machine (exemplary mobile work vehicle) 110, remote monitoring terminal devices 200, one for each agricultural machine 110, and a remote monitoring device (exemplary managing server) 130 connected to the remote monitoring terminal devices 200 over a communications network 140.

The remote monitoring device 130 is installed at a remote monitoring center 120 located remotely from the agricultural machines 110 and collects and stores data on the operation states of the agricultural machines 110. The remote monitoring device 130 is connected to terminal devices 160 (e.g., personal computers, tablet computers, and mobile terminals) over a network 150 (e.g., a LAN (local area network) or the Internet). The device 130 feeds collected data to the terminal devices 160 to make the data available to users, for example, the users and sales agents of the agricultural machines 110.

Specifically, each remote monitoring terminal device 200 and the remote monitoring device 130 include respectively a communications section 210 and a communications section 131 (specifically, communications modules) and are connected to each other over the communications network 140 through the communications sections 210 and 131 to enable information exchange between the remote monitoring terminal device 200 and the remote monitoring device 130. Thus, the remote monitoring device 130 enables the user at the remote monitoring center 120 to remotely monitor the agricultural machines 110.

The communications network 140 may be a wired communications network, a wireless communications network, or a combination of a wired and wireless communications networks. The communications network 140 is typically a public line network provided by a telecommunications carrier, for example, a public line network that enables communications between fixed-line phones, mobile phones, and like terminals.

As illustrated in Figure 2, each agricultural machine 110 includes at least one (in this case, two or more) work section 111 and a remote monitoring terminal device 200. The work section 111 may be, for example, a traveling section, a harvesting section, or a threshing section when the agricultural machine is a combine harvester.

Each work section 111 is equipped with an electronic control device (specifically, controller) 113 which instructs various actuators (not shown) to control the operation state of the work section 111 in a suitable manner. The electronic control devices 113 are capable of mutual data transfer in compliance with the CAN (Controller Area Network) standards.

Specifically, each electronic control device 113 controls the operation state of an associated work section 111 on the basis of detected value information (signals) detected by various sensors (detailed later) and on/off information of various switches (detailed later) in the work section 111. The electronic control device 113 evaluates, as needed, the presence/absence of irregularities, for example, whether there has occurred a breakdown/malfunction, in the agricultural machine 110. If there has occurred an irregularity, the device 113 generates error information (specifically, an error code) in accordance with the irregularity.

A work section 111 (traveling section 111a), or one of the work sections 111 which actuates an engine 112, includes the engine 112, an electronic control device 113 (engine controller 113a), an electric power generator 114, and a startup switch SW, and may further include a battery BT. The electronic control device 113 (engine controller 113a) monitors the rotational speed, load, and other conditions of the engine 112 to instruct a fuel system on, for example, an optimal injection pressure and an injection period for the control of the entire engine. The electronic control device 113 (engine controller 113a) controls manual startup/suspension operations and controls an operation state through activation of the engine 112, as well as controls the operation of the work section 111 (traveling section 111a).

After the work section 111 (traveling section 111a) is started (when the engine 112 is operating), the battery BT is charged, as needed, by an electric power supply from the electric power generator 114.

The startup switch SW of the work section 111 (traveling section 111a) is a toggling switch selectively toggling between a power-supply-on state and a power-supply-off state. The battery BT, in the power-supply-on state, supplies electric power to a control section 240 in the remote monitoring terminal device 200 and to the electronic control device 113 (engine controller 113a) (see Figure 3), whereas in the power-supply-off state, the battery BT is inhibited from supplying electric power to the control section 240 in the remote monitoring terminal device 200 and to the electronic control device 113 (engine controller 113a).

Specifically, the battery BT is connected both to a power supply connecting line L1 connected to the control section 240 in the remote monitoring terminal device 200 and to a power supply connecting line L2 connected to the electronic control device 113 (engine controller 113a) via the startup switch SW.

In this example, the startup switch SW is a "key switch." The startup switch SW has an ON terminal connected to the power supply connecting lines L1 and L2 while the engine 112 is operating and an OFF terminal used while the startup switch SW is being turned off.

As will be detailed later, the battery BT is connected to a power supply control section 220 in the remote monitoring terminal device 200 via a power supply connecting line Lbt to periodically start up power supply, no matter whether the startup switch SW is being turned on or off. Hence, the power supply control section 220 in the remote monitoring terminal device 200 is always fed with electric power from the battery BT.

### Remote Monitoring Terminal Device

As illustrated in Figure 3, the remote monitoring terminal device 200 includes a communications section 210, a power supply control section 220, a control section 240, and connection terminals T. The power supply control section 220 periodically starts up power supply while the startup switch SW of the agricultural machine 110 is being turned off. The control section 240, during communication, transmits/receives data and controls various inputs/outputs and computations. The remote monitoring terminal device 200 receives inputs of data on the operation state of the agricultural machine 110 via the connection terminals T.

### Communications Section

The communications section 210 is capable of the same communications protocols as the communications section 131 in the remote monitoring device 130 at the remote monitoring center 120 so that the communications section 210 can communicate with the communications section 131. The communications section 210 converts the data to be transmitted/received during communication according to the communications protocols. The communications section 210 then transmits the data, acquired by the control section 240, on the operation state of the agricultural machine 110 to the remote monitoring device 130.

### Power Supply Control Section

The power supply control section 220 has a timer function and is connected to the battery BT, no matter whether the startup switch SW is being turned off or on. Specifically, the battery BT is connected to an incoming power supply line (not shown) for the power supply control section 220 via the power supply connecting line Lbt, so that the power supply control section 220 can be always fed with electric power from the battery BT.

An outgoing power supply line (not shown) for the power supply control section 220 is connected to a power supply line (not shown) for the control section 240 via a power supply connecting line L3.

In the remote monitoring terminal device 200, the control section 240 is periodically fed with electric power from the battery BT by virtue of the timer function of the power supply control section 220 while the startup switch SW is being turned off to inhibit electric power from being supplied to the power supply connecting line L1 which connects the battery BT to the incoming power supply line for the control section 240. This arrangement is for the purpose of reducing the power consumption of the battery BT.

### Location Detection Section

In the present embodiment, the remote monitoring terminal device 200 further includes a GPS (Global Positioning System) sensor (exemplary location sensor) 231, a location detection section 232, and a location information storage section 233. The GPS sensor 231 receives radio waves from GPS satellites. The location detection section 232 detects the location information of the agricultural machine 110 in the radio waves received by the GPS sensor 231. The location information storage section 233 temporarily stores therein the location information detected by the location detection section 232.

The GPS sensor 231 receives radio waves (information containing an international standard time) from GPS satellites. The international standard time here is the UTC, or Universal Time Coordinated.

The location detection section 232 is capable of detecting, besides the location information of the agricultural machine 110, the velocity and orientation information of the agricultural machine 110. In other words, the location information contains information on the latitude, longitude, velocity, and orientation of the agricultural machine 110.

Specifically, the location detection section 232, along with the GPS sensor 231 and GPS satellites, constitutes a GPS satellite system (positioning system).

The location information storage section 233 is a volatile memory, such as a RAM (random access memory). The location information storage section 233 is connected to the power supply control section 220 so as to be always fed with electric power from the battery BT. Thus, the location information storage section 233 is capable of maintaining the location information even while the startup switch SW is being turned off.

### Control Section

The control section 240 includes a processor section 250, a storage section 260, and a time acquisition timer 270. The processor section 250 is composed of a CPU (central processing unit) or like microcomputer. The storage section 260 is composed primarily of a ROM (read only memory), RAM, and like volatile memory. The time acquisition timer 270 has a clock function to obtain date and time information for the remote monitoring terminal device 200.

The control section 240 controls the operation of various components by the processor section 250 loading control programs stored in advance in the ROM in the storage section 260 to the RAM in the storage section 260 and executing them.

The control section 240 includes a startup information transmission control section 241 which provides a startup information transmitting function for the transmission of startup information.

### Startup Information Transmitting Function

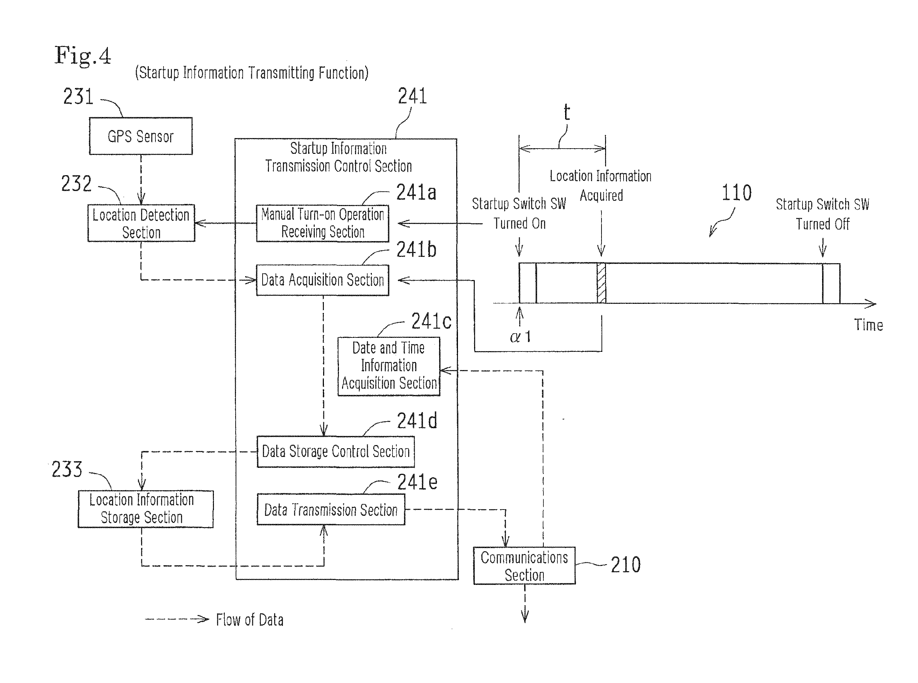

Figure 4 is a schematic operation diagram of an operation process for the startup information transmitting function implemented by the startup information transmission control section 241 in the control section 240.

The control section 240 includes the startup information transmission control section 241 which transmits startup information to the remote monitoring device 130 when the startup switch SW of the agricultural machine 110 is manually turned on (denoted by α1 in Figure 4). The startup information contains the location information (specifically, longitude and latitude) of the agricultural machine 110 and a date and time (specifically, year, month, day, hour, minute, and second according to the global standard Gregorian calendar) obtained upon a startup. The location information may contain the velocity and orientation of the agricultural machine 110.

Specifically, the startup information transmission control section 241 operates as a work section containing a manual turn-on operation receiving section 241a, a data acquisition section 241b, a date and time information acquisition section 241c, a data storage control section 241d, and a data transmission section 241e. The manual turn-on operation receiving section 241a receives a manual turn-on operation of the startup switch SW of the agricultural machine 110. The data acquisition section 241b detects and acquires the location information of the agricultural machine 110 and a date and time by means of the GPS sensor 231 and the location detection section 232 when the manual turn-on operation receiving section 241a has received a manual turn-on operation of the startup switch SW of the agricultural machine 110. The date and time information acquisition section 241c acquires date and time information from the remote monitoring device 130 if the data acquisition section 241b has failed to acquire a date and time. The data storage control section 241d temporarily stores in the location information storage section 233 the location information and date and time acquired by the data acquisition section 241b or the date and time information acquisition section 241c. The data transmission section 241e transmits the location information and date and time stored in the location information storage section 233 to the remote monitoring device 130 via the communications section 210.

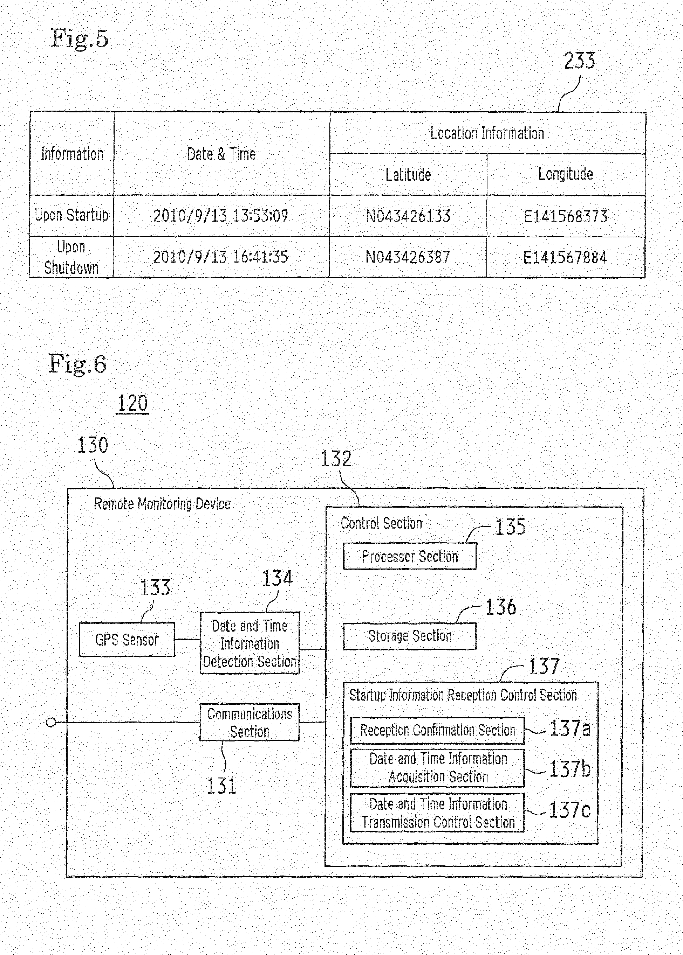

Figure 5 is a schematic illustration of data structure in the location information storage section 233 for use by the startup information transmission control section 241.

As illustrated in Figure 5, the location information storage section 233 stores therein a date and time (specifically, year, month, day, hour, minute, and second according to the global standard Gregorian calendar) and location information (latitude and longitude) when the startup switch SW of the agricultural machine 110 has been manually turned on (upon a startup). The location information storage section 233 further stores therein a date and time (specifically, year, month, day, hour, minute, and second according to the global standard Gregorian calendar) and location information (latitude and longitude) when the startup switch SW of the agricultural machine 110 has been manually turned off (upon a shutdown).

The time t from a manual turn-on operation of the startup switch SW to an acquisition of the location information of the agricultural machine 110 and a date and time in a detecting operation of the GPS sensor 231 (see Figure 4) may be, for example, approximately 40 seconds to 180 seconds.

If no date and time is acquired within a predetermined period (e.g., 300 seconds (5 minutes)) after a manual turn-on operation of the startup switch SW, the startup information transmission control section 241 acquires date and time information from the remote monitoring device 130.

The remote monitoring terminal device 200 converts, in the communications section 210, various information into a format that is in accordance with the communications protocols for the communications section 131 in the remote monitoring device 130. Thereafter, the remote monitoring terminal device 200 transmits the converted information to the remote monitoring device 130 over the communications network 140 and via the communications section 131. This enables the remote monitoring center to check the startup information (specifically, latitude and longitude and year, month, day, hour, minute, and second according to the global standard Gregorian calendar) of the agricultural machine 110.

### Remote Monitoring Device

Figure 6 is a schematic block diagram of the arrangement of the remote monitoring device 130 acting as a managing server for the remote monitoring system 100.

As illustrated in Figure 6, the remote monitoring device 130 at the remote monitoring center 120 includes a communications section 131, a control section 132, a GPS sensor (exemplary date and time receiving section) 133, and a date and time information detection section 134. The control section 132 controls data transmission/reception, various inputs/outputs, and computation during communication. The GPS sensor 133 receives from GPS (Global Positioning System) satellites radio waves as a date and time information transmission source. The date and time information detection section 134 detects an international standard time provided by the GPS satellites in the radio waves received by the GPS sensor 133. The GPS sensor 133 and the date and time information detection section 134 constitute an international standard time acquisition section for acquiring an international standard time.

### Communications Section

The communications section 131 is capable of the same communications protocols as the communications section 210 in the remote monitoring terminal device 200 so that the communications section 131 can communicate with the communications section 210. The communications section 131 converts the data to be transmitted/received during communication according to the communications protocols. The communications section 131 receives data on the operation state of the agricultural machine 110 from the remote monitoring terminal device 200. The communications section 131, as will be detailed later, transmits the date and time information acquired by the date and time information detection section 134 to the remote monitoring terminal device 200.

### Control Section

The control section 132 includes a processor section 135 and a storage section 136. The processor section 135 is composed of a CPU (central processing unit) or like microcomputer. The storage section 136 is composed primarily of a ROM (read only memory), RAM, and like volatile memory.

The control section 132 controls the operation of various components by the processor section 135 loading control programs stored in advance in the ROM in the storage section 136 to the RAM in the storage section 136 and executing them.

The control section 132 includes a startup information reception control section 137 providing a startup information receiving function for receiving startup information.

### Startup Information Receiving Function

The startup information reception control section 137 transmits date and time information generated from the date and time of reception of a failure indication to the remote monitoring terminal device 200 associated with the startup information. Date and time information generated from the date and time of reception of a failure indication refers to a date and time acquired by the date and time information detection section 134 sometime between a reception of startup information to a transmission of a date and time. The date and time information may be, for example, the date and time of reception of startup information as acquired by the date and time information detection section 134 or the date and time of transmission of a date and time as acquired by the date and time information detection section 134.

Specifically, the startup information reception control section 137 receives startup information from the remote monitoring terminal device 200 and stores it in the storage section 136. More specifically, the startup information reception control section 137 operates as a work section containing a reception confirmation section 137a, a date and time information acquisition section 137b, and a date and time information transmission control section 137c. The reception confirmation section 137a receives, from the remote monitoring terminal device 200, a terminal ID of the remote monitoring terminal device 200 (e.g., the telephone number of the terminal) and date and time information obtained upon the startup of the remote monitoring terminal device 200. The date and time information acquisition section 137b acquires the date and time information detected by the date and time information detection section 134 if the information received by the reception confirmation section 137a does not contain date and time information obtained upon the startup of the remote monitoring terminal device 200. The date and time information transmission control section 137c transmits the date and time information acquired by the date and time information acquisition section 137b to the remote monitoring terminal device 200 associated with the terminal ID received by the reception confirmation section 137a.

### Exemplary Operation of Startup Information Transmission Control Section and Startup Information Reception Control Section

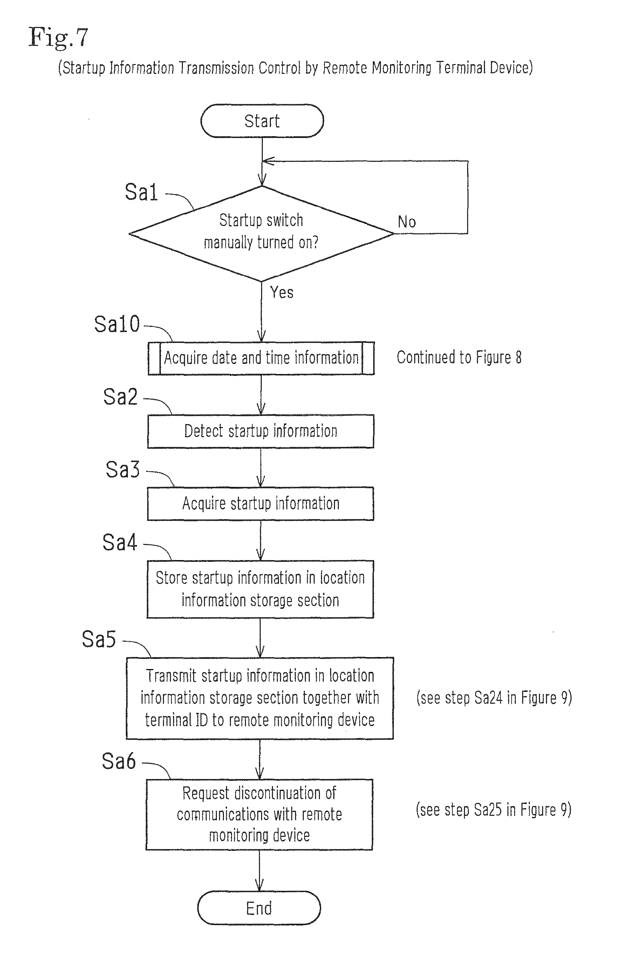

Next will be described an exemplary operation of the startup information transmission control section 241 in the remote monitoring terminal device 200 and the startup information reception control section 137 in the remote monitoring device 130 in reference to Figures 7 to 9.

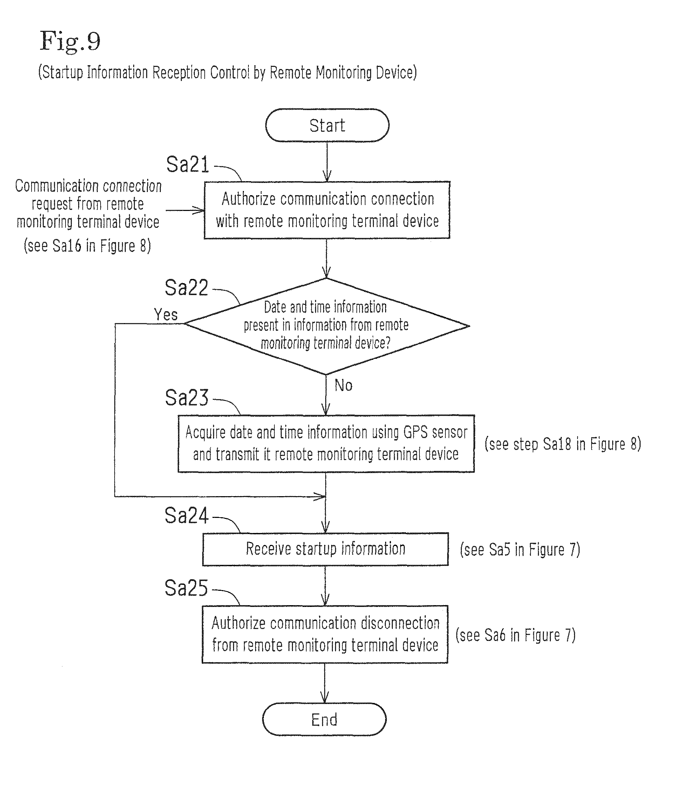

Figure 7 is a flow chart depicting an exemplary operation of the startup information transmission control section 241 in the remote monitoring terminal device 200. Figure 8 is a flow chart depicting a subroutine (step Sa10) for a date and time information acquisition process shown in Figure 7. Figure 9 is a flow chart depicting an exemplary operation of the startup information reception control section 137 in the remote monitoring device 130.

### Process as Viewed from Remote Monitoring Terminal Device 200

As depicted in the flow chart in Figure 7 for the startup information transmission control section 241, the date and time information acquisition process shown in Figure 8 (step Sa10) is implemented upon the startup switch SW being manually turned on (Yes in step Sa1).

In other words, according to the date and time information acquisition process shown in Figure 8 (step Sa10), first, the section 241 initializes the time acquisition timer 270 in the remote monitoring terminal device 200 (step Sa11). The section 241 then measures time starting at the start of a date and time information acquiring operation to determine whether a predetermined date and time information acquisition time specified for acquisition of date and time information has elapsed (step Sa12). If the date and time information acquisition time has elapsed (Yes in step Sa12), the process proceeds to step Sa16. On the other hand, if the date and time information acquisition time has not elapsed (No in step Sa12), the section 241 detects date and time information by means of the GPS sensor 231 (step Sa13) to determine whether date and time information has been acquired (step Sa14). If no date and time information has been acquired (No in step Sa14), the process proceeds to step Sa12. On the other hand, if date and time information has been acquired (Yes in step Sa14), the section 241 sets up the time acquisition timer 270 according to the acquired date and time information (step Sa15) and connects to the remote monitoring device 130 to transmit, from the remote monitoring terminal device 200 to the remote monitoring device 130, a terminal ID, startup confirmation information indicating that the agricultural machine 110 has been started, and if any, date and time information (step Sa16).

### Process as Viewed from Remote Monitoring Device 130

As depicted in the flow chart in Figure 9 for the startup information reception control section 137, the section 137 authorizes a communication connection with the remote monitoring terminal device 200 in response to a communication connection request from the remote monitoring terminal device 200 in step Sa16 shown in Figure 8 (step Sa21). At the same time, the remote monitoring device 130 acquires startup confirmation information to recognize that the remote monitoring terminal device 200 associated with the incoming terminal ID has been started.

Next, it is determined whether date and time information is present in information from the remote monitoring terminal device 200 (step Sa22). If date and time information is present (Yes in step Sa22), the process proceeds to step Sa24. On the other hand, date and time information is not present (No in step Sa22), the section 137 acquires date and time information by means of the GPS sensor 133 to transmit it to the remote monitoring terminal device 200 associated with the terminal ID (step Sa23).

### Process as Viewed from Remote Monitoring Terminal Device 200

In step Sa17 in Figure 8, it is determined whether the time acquisition timer 270 has been set up according to the date and time information. If the time acquisition timer 270 has not been set up according to the date and time information (No in step Sa17), the section 241 acquires date and time information transmitted from the remote monitoring device 130 (step Sa18) and sets up the time acquisition timer 270 according to the acquired date and time information (step Sa19).

On the other hand, if it is determined in step Sa17 that the time acquisition timer 270 has been set up according to the date and time information (Yes in step Sa17), the process returns to step Sa2 in Figure 7.

In Figure 7, the section 241 detects (step Sa2) and acquires (step Sa3) the startup information of the agricultural machine 110 (in this example, location information and date and time) by means of the GPS sensor 231 and the location detection section 232.

Next, the section 241 stores the acquired startup information in the location information storage section 233 (step Sa4) and transmits the startup information stored in the location information storage section 233, together with the terminal ID, to the remote monitoring device 130 (step Sa5).

### Process as Viewed from Remote Monitoring Device 130

In step Sa24 in Figure 9, the section 137 receives the startup information and terminal ID transmitted from the remote monitoring terminal device 200 (step Sa24).

### Process as Viewed from Remote Monitoring Terminal Device 200

In step Sa6 in Figure 7, the section 241 sends a request for a communication disconnection from the remote monitoring device 130, which ends the process.

### Process as Viewed from Remote Monitoring Device 130

In step Sa25 in Figure 9, the section 137 authorizes a communication disconnection from the remote monitoring terminal device 200 associated with the terminal ID, which ends the process.

The remote monitoring device 130 described above, upon receiving from a remote monitoring terminal device 200 an indication that the remote monitoring terminal device 200 failed to acquire date and time information via the GPS satellite system upon the startup of the remote monitoring terminal device 200, transmits date and time information generated from the date and time of reception of the failure indication to the remote monitoring terminal device 200. Hence, the remote monitoring terminal device 200 is capable of obtaining a startup date and time even if the remote monitoring terminal device 200 has failed to acquire a startup date and time due to a communication error between the remote monitoring terminal device 200 and the GPS satellites or for a similar reason.

### Other Embodiments

The remote monitoring system 100 in accordance with the present embodiment has been described as being applicable to combine harvesters, tillers, rice transplanters, or like mobile work vehicles. The remote monitoring system 100 is by no means limited to these applications and also preferably applicable to mobile work machines, such as tractors, excavators, wheel loaders, carriers, and like construction work machinery, and vessels, such as pleasure crafts and fishing boats.

The present invention is by no means limited to the embodiments described above and may be implemented in various forms. Therefore, the embodiments are for illustrative purposes only in every respect and should not be subjected to any restrictive interpretations. The scope of the present invention is defined only by the claims and never bound by the specification. Those modifications and variations that may lead to equivalents of claimed elements are all included within the scope of the invention.

### Industrial Applicability

The present invention relates to a managing server for a remote monitoring system for communication with a remote monitoring terminal device, especially, with a remote monitoring terminal device mounted to mobile work vehicles (e.g., construction and agricultural machinery) or vessels (e.g., pleasure crafts and fishing boats). The present invention is applicable, especially, for the purpose of obtaining a startup date and time even if the remote monitoring terminal device has failed to acquire a startup date and time due to a communication error between the remote monitoring terminal device and the GPS satellites or for a similar reason.

### Reference Signs List

- 100: Remote Monitoring System
- 130: Remote Monitoring Device (Exemplary Managing Server)
- 131: Communications Section
- 132: Control Section
- 133: GPS Sensor
- 134: Date and Time Information Detection Section
- 135: Processor Section
- 136: Storage Section
- 137: Startup Information Reception Control Section
- 137a: Reception Confirmation Section
- 137b: Date and Time Information Acquisition Section
- 137c: Date and Time Information Transmission Control Section
- 140: Communications Network
- 150: Network
- 160: Terminal Device
- 200: Remote Monitoring Terminal Device
- 210: Communications Section
- 220: Power Supply Control section
- 231: GPS Sensor
- 232: Location Detection Section
- 233: Location Information Storage Section
- 240: Control Section
- 241: Startup Information Transmission Control Section
- 241a: Manual Turn-on Operation Receiving Section
- 241b: Data Acquisition Section
- 241c: Date and Time Information Acquisition Section
- 241d: Data Storage Control Section
- 241e: Data Transmission Section
- 250: Processor Section
- 260: Storage Section
- 270: Time Acquisition Timer
- T: Connection Terminal

## Claims

1. A remote monitoring system (100) comprising a managing server (130) for communication with a remote monitoring terminal device (200) which includes a GPS sensor (231) and a location detection section (232) acquiring a startup date and time via GPS satellites upon a startup and includes a communications section (210) transmitting not only the startup date and time but also data on the operation state of a mobile work machine or a vessel (110), wherein said managing server (130) includes a communications section (131), a control section (132), a GPS sensor (133), and a date and time information detection section (134), said managing server (130) determining whether date and time information is present or absent in information provided by the remote monitoring terminal device (200) upon receiving a communication connection request from the remote monitoring terminal device (200) after a startup thereof, transmitting date and time information acquired by said GPS sensor (133) and said date and time information detection section (134) via GPS satellites to the remote monitoring terminal device (200) upon having determined that the remote monitoring terminal device (200) provides no date and time information, and collecting and storing the data on the operation state of the mobile work machine or the vessel (110).

## Patentansprüche

1. Ein Fernüberwachungssystem (100), umfassend einen Verwaltungsserver (130), zur Kommunikation mit einer Fernüberwachungsterminaleinrichtung (200), welche einen GPS-Sensor (231) und eine Ortserkennungseinheit (232) beinhaltet, welche ein Anlaufdatum und eine Anlaufzeit via GPS-Satelliten bei einem Anlauf akquiriert und welche eine Kommunikationseinheit (210) beinhaltet, welche nicht nur das Anlaufdatum und die Anlaufzeit überträgt, sondern auch Daten über den Betriebszustand einer mobilen Arbeitsmaschine oder eines Schiffes (110), worin besagter Verwaltungsserver (130) eine Kommunikationseinheit (131), eine Kontrolleinheit (132), einen GPS-Sensor (133), und eine Datums- und Zeitinformationsdetektionseinheit (134) beinhaltet,
wobei besagter Verwaltungsserver (130) ermittelt, ob eine Datums- und Zeitinformation vorhanden oder fehlend ist in der Information, die bereitgestellt wird durch die Fernüberwachungsterminaleinrichtung (200) bei Erhalt einer Kommunikationsverbindungsanfrage von der Fernüberwachungsterminaleinrichtung (200) nach einem Anlauf davon, Datums- und Zeitinformation, akquiriert von besagtem GPS-Sensor (133) und besagter Datums- und Zeitinformationsdetektionseinheit (134) via GPS-Satelliten, zur Fernüberwachungsterminaleinrichtung (200) überträgt nach der Bestimmung, dass die Fernüberwachungsterminaleinrichtung (200) keine Datums- und Zeitinformation bereitstellt, und Sammeln und Speichern der Daten über den Betriebszustand der mobilen Arbeitsmaschine oder des Schiffes (110).

## Revendications

1. Un système de télésurveillance (100) comprenant un serveur de gestion (130) pour
communiquer avec un terminal de contrôle à distance (200) qui comporte un capteur GPS (231) et une section destinée à la localisation (232) obtenant la date et l'heure du démarrage via des satellites GPS lors du démarrage et qui comporte une section destinée aux communications (210) transmettant non seulement la date et l'heure du démarrage mais aussi des données concernant le statut opérationnel d'une machine de travail mobile ou d'un récipient (110),
dans lequel ledit serveur de gestion (130) inclut une section destinée aux communications (131), une section de commande (132), un capteur GPS (133) et une section de détection des informations concernant la date et l'heure (134), ledit serveur de gestion (130) déterminant si la date et l'heure sont présentes ou absentes dans l'information fournie par le terminal de contrôle à distance (200) dès réception d'une demande de connexion de communication par le terminal de contrôle à distance (200) après le démarrage de celui-ci, transmettant l'information concernant la date et l'heure fournie par ledit capteur GPS (133) et ladite section de détection des informations concernant la date et l'heure (134) via les satellites GPS au terminal de contrôle à distance (200) lorsqu'il a déterminé que le terminal de contrôle à distance (200) ne fournit aucune information concernant la date et l'heure, et rassemblant et stockant les données concernant le statut opérationnel d'une machine de travail mobile ou d'un récipient (110).
